# EUROPEAN PATENT APPLICATION

(11) **EP 4 746 418 A1**
(43) Date of publication of application: **20.05.2026**
(21) Application number: 24860131.2
(22) Date of filing: 02.07.2024
(51) Int. Cl.: H04N 21/43, H04N 21/436, H04N 21/4363

(54) **DISPLAY APPARATUS AND METHOD FOR CONTROLLING SAME**

(30) Priority: 01.09.2023 KR 20230116476
(71) Applicant: Samsung Electronics Co., Ltd., Suwon-si, Gyeonggi-do 16677 (KR)
(72) Inventor: SHIN, Hyunjong, Suwon-si, Gyeonggi-do 16677 (KR); KIM, Minsang, Suwon-si, Gyeonggi-do 16677 (KR); YUN, Sungryul, Suwon-si, Gyeonggi-do 16677 (KR)
(74) Representative: Gulde & Partner
(86) International application number: PCT/KR2024/009291
(87) International publication number: WO 2025/048207

(57) **Abstract**

A display apparatus includes a first connection interface connected to a source device, a second connection interface connected to a sound output device, a first controller that performs a first lip sync adjustment for video output and audio output using a first data channel of the first connection interface, a second controller that performs a second lip sync adjustment for the video output and the audio output using a second data channel of the second connection interface, and a main controller that identifies the first lip sync adjustment performed by the first controller or the second lip sync adjustment performed by the second controller, based on whether the source device supports the first lip sync adjustment through the first data channel.

## Description

### [TECHNICAL FIELD]

The disclosure relates to a display apparatus that performs lip sync adjustment of video output and audio output, and a method for controlling the same.

### [BACKGROUND ART]

A display apparatus may include various connection interfaces for connection with an external device. For example, the display apparatus may include high definition multimedia interface (HDMI). The display apparatus may be connected to at least one of a source device or a sound output device through the connection interface. The display apparatus, as a sink device, may receive source data including video data and audio data from the source device.

The display apparatus may process the video data to output video, and may process the audio data to cause the sound output device to output audio. The time taken to process the video data and the time taken to process the audio data may differ depending on the performance of the display apparatus and the source data. In a case where there is a difference between video latency due to video data processing time and audio latency due to audio data processing time, lip sync between the video output and the audio output may be mismatched. Various technologies exist to adjust the lip sync between the video output and the audio output to synchronize the video output and the audio output.

### [DISCLOSURE]

### [TECHNICAL SOLUTION]

Provided are a display apparatus that may prevent errors caused by redundant application of a plurality of lip sync control technologies by selectively using one of the plurality of lip sync control technologies, and a method for controlling the display apparatus.

According to an aspect of the disclosure, there is provided a display apparatus, including: a first connection interface connected to a source device; a second connection interface connected to a sound output device; a first controller configured to perform a first lip sync adjustment for video output and audio output using a first data channel of the first connection interface; a second controller configured to perform a second lip sync adjustment for the video output and the audio output using a second data channel of the second connection interface; and a main controller configured to identify the first lip sync adjustment performed by the first controller or the second lip sync adjustment performed by the second controller, based on whether the source device supports the first lip sync adjustment through the first data channel.

According to an aspect of the disclosure, there is provided a method for controlling a display apparatus including a first connection interface connected to a source device, a second connection interface connected to a sound output device, and a processor, the method including: identifying, by the processor, whether the source device supports a first lip sync adjustment for video output and audio output using a first data channel of the first connection interface; and identifying, by the processor, the first lip sync adjustment using the first data channel or a second lip sync adjustment for the video output and the audio output using a second data channel of the second connection interface, based on whether the source device supports the first lip sync adjustment through the first data channel.

According to the disclosure, a display apparatus and a method for controlling the same may adjust synchronization between video output and audio output by selectively using one of the plurality of lip sync control technologies. That is, the display apparatus and the method for controlling the same may prevent errors caused by redundant application of the plurality of lip sync control technologies.

### [DESCRIPTION OF DRAWINGS]

FIG. 1 illustrates a system according to an embodiment;
FIG. 2 illustrates a configuration of a display apparatus according to an embodiment;
FIG. 3 is a flowchart illustrating a method for controlling a display apparatus according to an embodiment;
FIG. 4 is a flowchart illustrating the method for controlling the display apparatus according to an embodiment;
FIG. 5 is a flowchart illustrating an example of data and information exchange among a display apparatus, a source device, and a sound output device, according to an embodiment; and
FIG. 6 is a flowchart illustrating another example of data and information exchange among a display apparatus, a source device, and a sound output device, according to an embodiment.

### [MODES OF THE INVENTION]

Embodiments described in the specification and configurations shown in the accompanying drawings are merely examples of the disclosure, and various modifications may replace the embodiments and the drawings of the disclosure at the time of filing of the application.

Like reference numerals or symbols denoted in the drawings of the specification are members or components that perform the substantially same functions.

A singular form of a noun corresponding to an item may include one item or a plurality of the items unless context clearly indicates otherwise.

As used herein, each of the expressions "A or B," "at least one of A and B," "at least one of A or B," "A, B, or C," "at least one of A, B, and C," and "at least one of A, B, or C," may include one or all possible combinations of the items listed together with a corresponding expression among the expressions.

It will be understood that the terms "first", "second", or the like, may be used only to distinguish one component from another, and are not intended to limit the corresponding component in other aspects (e.g., importance or order).

When it is said that one (e.g., first) component is "coupled" or "connected" to another (e.g., second) component, with or without the terms "functionally" or "communicatively", it means that one component may be connected to the other component directly (e.g., by wire), wirelessly, or through a third component.

It will be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

An expression that one component is "connected", "coupled", "supported", or "in contact" with another component includes a case in which the components are directly "connected", "coupled", "supported", or "in contact" with each other and a case in which the components are indirectly "connected", "coupled", "supported", or "in contact" with each other through a third component.

It will also be understood that when one component is referred to as being "on" or "over" another component, it may be directly on the other component or intervening components may also be present.

The term "and/or" includes any and all combinations of one or more of a plurality of associated listed items.

Hereinafter, an operation principle and embodiments of the disclosure is described in detail with reference to the accompanying drawings.

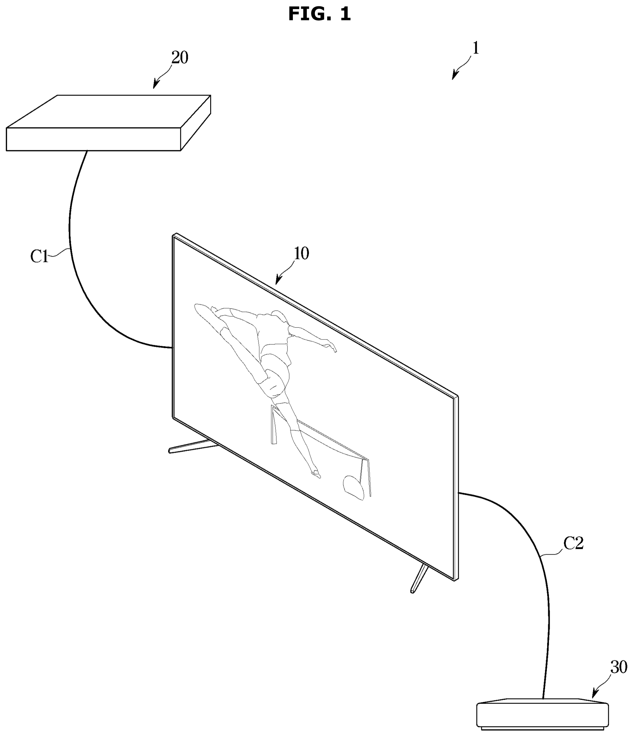

FIG. 1 illustrates a system according to an embodiment.

Referring to FIG. 1, a system 1 may include a display apparatus 10, a source device 20, and a sound output device 30. The display apparatus 10 and the source device 20 may be connected through a first cable C1. The display apparatus 10 and the sound output device 30 may be connected through a second cable C2.

Various connection interfaces may be used for the connection between the display apparatus 10 and the source device 20 and the connection between the display apparatus 10 and the sound output device 30. For example, the connection interface may include high definition multimedia interface (HDMI). The first cable C1 and the second cable C2 may be HDMI cables.

The display apparatus 10 may include various devices capable of displaying images and/or video. The display apparatus 10 may also output audio. For example, the display apparatus 10 may be a light emitting diode (LED) display, a liquid crystal display (LCD), an organic light emitting diode (OLED) display, an inorganic light emitting diode display, or a beam projector. The display apparatus 10 is not limited to the above examples.

The source device 20 may transmit source data including video data and audio data to the display apparatus 10. For example, the source device 20 may be a set-top box, a cable receiver, a satellite broadcasting receiving device, a personal computer, a game console, a smartphone, or a Blu-ray disc player. The source device 20 is not limited to the above examples.

The display apparatus 10 may receive the source data including the video data and the audio data from the source device 20, and may process the source data. In other words, the display apparatus 10 may correspond to a sink device. The display apparatus 10 may process the video data to output video through a display 140. The display apparatus 10 may process the audio data to output audio through a speaker 150 or the sound output device 30.

The sound output device 30 may include various devices capable of outputting audio. For example, the sound output device 30 may be a soundbar or an audio video (AV) receiver. The sound output device 30 is not limited to the above examples. The sound output device 30 may receive the audio data from the display apparatus 10. The sound output device 30 may output audio based on the received audio data.

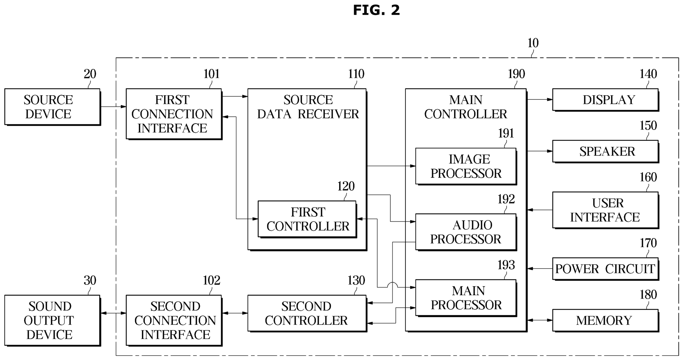

FIG. 2 illustrates a configuration of a display apparatus according to an embodiment.

Referring to FIG. 2, the display apparatus 10 may include a first connection interface 101 and a second connection interface 102. The first connection interface 101 and the second connection interface 102 may be of the same type, and may correspond to high definition multimedia interface (HDMI). The source device 20 may be connected to the display apparatus 10 through the first connection interface 101. The sound output device 30 may be connected to the display apparatus 10 through the second connection interface 102.

The first connection interface 101 and the second connection interface 102 may each include various data channels. For example, the first connection interface 101 and the second connection interface 102, which correspond to HDMI, may include a transition minimized differential signaling (TMDS) channel, a display data channel (DDC), a status and control data channel (SCDC), and a consumer electronics control (CEC) channel.

The source data provided by the source device 20 may be transmitted to the display apparatus 10, which is a sink device, through the TMDS channel. That is, the display apparatus 10 may receive video data and audio data through the TMDS channel.

The source device 20 may read the extended display identification (EDID) of the display apparatus 10 through the display data channel (DDC). The EDID may include detailed information about the display apparatus 10. For example, the EDID may include a manufacturer ID indicating the manufacturer, a model ID indicating the product model name, functions supported by the display apparatus 10, horizontal and vertical dimensions of the display, color characteristic information, resolution information, and timing information. The source device 20 may check the EDID of the display apparatus 10 and transmit source data suitable for the display apparatus 10.

The status and control data channel (SCDC) is a peer-to-peer data channel. The SCDC provides a one-to-one communication protocol based on serial communication that enables data exchange between the source device 20 and the sink device. The SCDC may correspond to a first data channel described below.

The source device 20 may provide capability information of the source device 20 to the display apparatus 10 through the display data channel (DDC). The display apparatus 10 may confirm, from the obtained capability information of the source device 20, whether the source device 20 supports the use of SCDC and lip sync adjustment through SCDC.

The CEC channel may be used for transmitting a control command between the source device 20 and the display apparatus 10 and for transmitting a control command between the display apparatus 10 and the sound output device 30. The CEC channel provides an additional protocol for performing high-level control functions. Devices connected through the CEC channel may be controlled together. For example, when a power-on command for turning on the display apparatus 10 is input, the source device 20 and the sound output device 30 may be turned on simultaneously. The CEC channel may correspond to a second data channel described below.

The display apparatus 10 may include a source data receiver 110, a first controller 120, a second controller 130, the display 140, the speaker 150, a user interface 160, a power circuit 170, a memory 180, and a main controller 190.

The source data receiver 110 may receive source data including video data and audio data through the first connection interface 101, and transmit the source data to the main controller 190.

The display apparatus 10 may include the first controller 120 that performs a first lip sync adjustment for video output and audio output using the first data channel (e.g., SCDC) of the first connection interface 101 connected to the source device 20. The first data channel may be the status and control data channel (SCDC). The first controller 120 is shown as being included in the source data receiver 110, but is not limited thereto. The first controller 120 may be provided separately from the source data receiver 110. The first controller 120 may include a processor. The first controller 120 may also be referred to as a first lip sync controller.

The display apparatus 10 may include the second controller 130 that performs a second lip sync adjustment for video output and audio output using the second data channel (e.g., CEC) of the second connection interface 102 connected to the sound output device 30. The second data channel may be the CEC channel. The audio data processed by an audio processor 192 may be transmitted to the sound output device 30 through the second connection interface 102. A main processor 193 may control the second controller 130 to transmit the audio data to the sound output device 30. The second controller 130 may include a processor. The second controller 130 may also be referred to as a second lip sync controller.

The display 140 may output video and/or images under the control of the main controller 190. The display 140 may be provided with various panels. For example, the display 140 may be provided with an LED panel, an LCD panel, an OLED panel, or an inorganic LED panel. The speaker 150 may output audio under the control of the main controller 190.

The user interface 160 may obtain user input. The user interface 160 may include various physical buttons and/or touch buttons provided on the display apparatus 10. In a case where the display 140 includes a touch screen panel, the display 140 may also serve as the user interface. The user interface 160 may obtain user input for controlling the display apparatus 10, such as power on, power off, volume adjustment, channel adjustment, screen adjustment, and various setting changes of the display apparatus 10.

The power circuit 170 may supply power to the components of the display apparatus 10. The power circuit 170 may supply power to electronic components included in the display apparatus 10. The main controller 190 may convert the power transmitted from the power circuit 170 to be suitable for each electronic component of the display apparatus 10, and then provide the converted power to each electronic component.

The memory 180 may store various information required for the operation of the display apparatus 10. The memory 180 may store programs, data, instructions, software, and/or applications for controlling the operation of the display apparatus 10. The memory 180 may include volatile memory, such as static random access memory (S-RAM) or dynamic random access memory (D-RAM) for temporarily storing data. In addition, the memory 180 may include non-volatile memory, such as read only memory (ROM), erasable programmable read only memory (EPROM), or electrically erasable programmable read only memory (EEPROM) for long-term data storage.

The main controller 190 may control the overall operation of the display apparatus 10. The main controller 190 may control the operation of the display apparatus 10 using programs, instructions, and/or data stored in the memory 180.

The main controller 190 may include an image processor 191, the audio processor 192, and the main processor 193. The image processor 191 may process video data to be suitable for video output through the display 140. The audio processor 192 may process audio data to be suitable for audio output through the speaker 150 or the sound output device 30.

The main processor 193 may control the display 140 to output video based on the video data processed by the image processor 191. The main processor 193 may control the speaker 150 to output audio based on the audio data processed by the audio processor 192. The main processor 193 may control the components of the display apparatus 10 to perform an operation corresponding to the user input obtained through the user interface 160. The main processor 193 may also transmit the processed audio data to the sound output device 30.

In addition, the main processor 193 may control the first controller 120 to perform lip sync adjustment for video output and audio output using the first data channel of the first connection interface 101 connected to the source device 20. The main processor 193 may control the second controller 130 to perform lip sync adjustment for video output and audio output using the second data channel of the second connection interface 102 connected to the sound output device 30. The first connection interface 101 and the second connection interface 102 may be of the same type, and the first data channel and the second data channel may be of different types.

Meanwhile, the time taken to process video data and the time taken to process audio data may differ depending on the performance of the display apparatus 10 and the source data transmitted from the source device 20. In a case where there is a difference between video latency due to video data processing time and audio latency due to audio data processing time, lip sync between video output and audio output may be mismatched. Various methods may be used to adjust the lip sync of video output and audio output.

For example, lip sync adjustment may be performed between the display apparatus 10 and the source device 20. The display apparatus 10 may generate total latency information including video latency and first audio latency caused by the display apparatus 10 and second audio latency caused by the sound output device 30. In addition, the display apparatus 10 may transmit the total latency information to the source device 20. The total latency information may include a lip sync adjustment command. The display apparatus 10 may also transmit a request for delaying transmission of the video data (video data transmission delay request) or a request for delaying transmission of the audio data (audio data transmission delay request) to the source device 20 along with the total latency information. The source device 20 may transmit lip sync-adjusted source data to the display apparatus 10 in consideration of the total latency information transmitted from the display apparatus 10. As such, lip sync adjustment performed by the display apparatus 10 transmitting the total latency information to the source device 20 is referred to as first lip sync adjustment.

In another example, lip sync adjustment may be performed between the display apparatus 10 and the sound output device 30. The display apparatus 10 may determine (or identify) a transmission timing of audio data for transmitting the audio data to the sound output device 30, considering video latency and first audio latency caused by the display apparatus 10 and second audio latency caused by the sound output device 30. As such, lip sync adjustment performed by the display apparatus 10 adjusting the transmission timing of audio data to the sound output device 30 is referred to as second lip sync adjustment.

However, when sync adjustment between video output and audio output is individually performed by a plurality of methods, lip sync may be misaligned. For example, even though a delay in audio data transmission from the display apparatus 10 to the sound output device 30 is determined because the video latency is longer than the total audio latency, the transmission of audio data from the source device 20 to the display apparatus 10 may also be delayed. In this case, because the transmission delay of audio data occurs redundantly by both the display apparatus 10 and the source device 20, the audio output through the sound output device 30 may be excessively delayed.

To prevent redundant lip sync adjustment, the display apparatus 10 requires to selectively use one of a plurality of lip sync control technologies. To this end, the main controller 190 of the display apparatus 10 may determine whether the source device 20 supports the first lip sync adjustment through the first data channel (e.g., SCDC) of the first connection interface 101. The main controller 190 may determine whether the source device 20 supports the first lip sync adjustment through the first data channel based on the capability information of the source device 20 provided from the source device 20.

The main controller 190 may determine the first lip sync adjustment performed by the first controller 120 or the second lip sync adjustment performed by the second controller 130, based on whether the source device 20 supports the first lip sync adjustment through the first data channel (e.g., SCDC).

The main controller 190 may control the first controller 120 to perform the first lip sync adjustment using the first data channel, based on the source device 20 supporting the first lip sync adjustment through the first data channel. In addition, the main controller 190 may control the second controller 130 not to perform the second lip sync adjustment using the second data channel of the second connection interface 102 connected to the sound output device 30.

In a case where the source device 20 does not support the first lip sync adjustment through the first data channel, the display apparatus 10 may not transmit the total latency information to the source device 20, nor may it transmit a lip sync adjustment command, a video data transmission delay request, or an audio data transmission delay request to the source device 20. In this case, the main controller 190 may control the second controller 130 to perform the second lip sync adjustment using the second data channel of the second connection interface 102 connected to the sound output device 30.

As such, by providing a separate main controller 190 capable of controlling the operations of the first controller 120 and the second controller 130 that perform lip sync adjustment using different data channels, and by selectively using lip sync adjustment by the first controller 120 and lip sync adjustment by the second controller 130, the sync of video output and audio output may be appropriately adjusted.

The main controller 190 may obtain source data including video data and audio data from the source device 20. The main controller 190 may determine video latency for the video data and first audio latency for the audio data. In addition, the main controller 190 may obtain second audio latency from the sound output device 30. The second audio latency corresponds to the audio latency caused by the sound output device 30.

The main controller 190 may generate total latency information including video latency for the video data, first audio latency for the audio data, and the second audio latency of the sound output device 30. Based on the source device 20 supporting the first lip sync adjustment through the first data channel, the main controller 190 may control the first controller 120 to transmit the total latency information to the source device 20 to perform the first lip sync adjustment. The total latency information may include a lip sync adjustment command.

The main controller 190 may compare a sum of the first audio latency and the second audio latency with the video latency. In a case where the source device 20 supports the first lip sync adjustment through the first data channel, the main controller 190 may control the first controller 120 to transmit a video data transmission delay request or an audio data transmission delay request to the source device 20, based on the result of comparing the video latency and the total audio latency. The video data transmission delay request or the audio data transmission delay request may be included in the total latency information.

For example, in a case where the sum of the first audio latency and the second audio latency is longer than the video latency, the main controller 190 may control the first controller 120 to transmit the video data transmission delay request to the source device 20. In a case where the sum of the first audio latency and the second audio latency is shorter than the video latency, the main controller 190 may control the first controller 120 to transmit the audio data transmission delay request to the source device 20.

In a case where the source device 20 does not support the first lip sync adjustment through the first data channel, the main controller 190 may determine a transmission timing of audio data for transmitting the audio data to the sound output device 30. The main controller 190 may determine the transmission timing of audio data based on a difference between the total audio latency, which is the sum of the first audio latency caused by the display apparatus 10 and the second audio latency caused by the sound output device 30, and the video latency.

The main controller 190 may control the second controller 130 to transmit the audio data to the sound output device 30 at the determined transmission timing. In a case where the video latency is longer than the total audio latency, the main controller 190 may delay the transmission of audio data by a time corresponding to the difference between the video latency and the total audio latency.

The configuration of the display apparatus 10 is not limited to that described in FIG. 2. Other components may be added or the components described in FIG. 2 may be omitted.

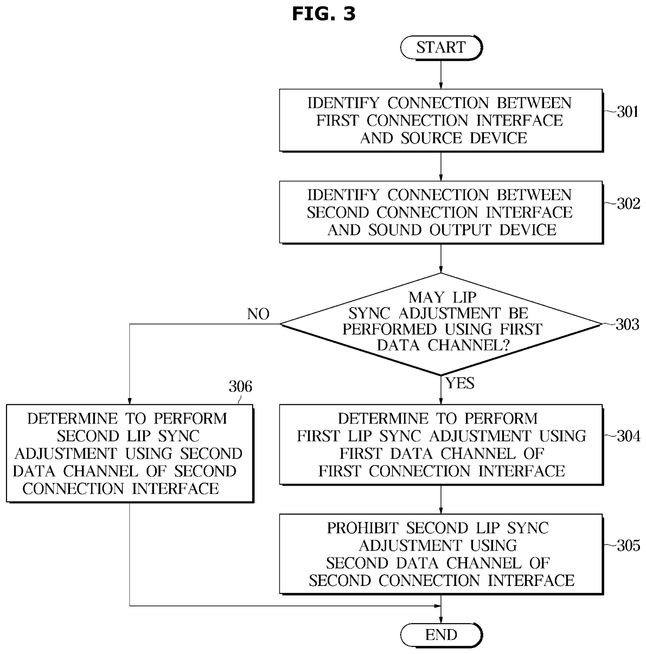

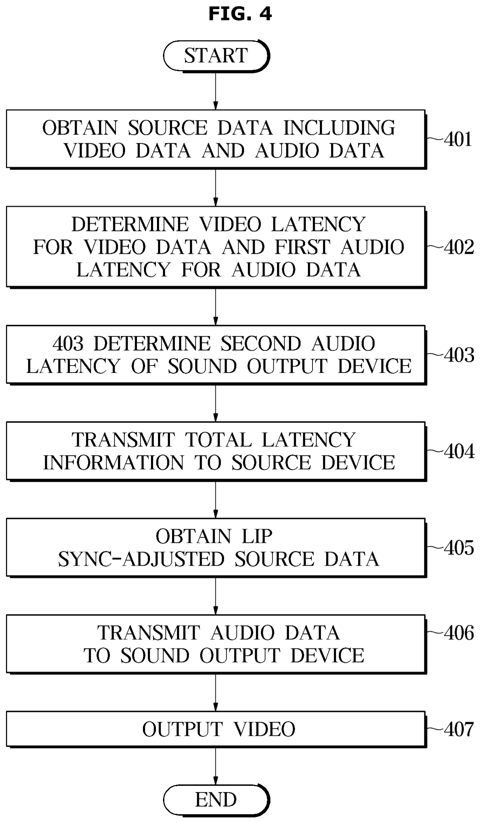

FIG. 3 is a flowchart illustrating a method for controlling a display apparatus according to an embodiment. FIG. 4 is a flowchart illustrating the method for controlling the display apparatus described in FIG. 3 in more detail.

Referring to FIG. 3, the main controller 190 of the display apparatus 10 may identify the connection between the first connection interface 101 and the source device 20 (301). The main controller 190 may identify the connection between the second connection interface 102 and the sound output device 30 (302).

The main controller 190 may determine whether lip sync adjustment is capable using the first data channel (e.g., SCDC) of the first connection interface 101 connected to the source device 20 (303). Lip sync adjustment using the first data channel of the first connection interface 101 may be performed by the display apparatus 10 and the source device 20. The main controller 190 may determine whether the source device 20 supports lip sync adjustment through the first data channel of the first connection interface 101 based on capability information of the source device 20 provided from the source device 20.

In a case where lip sync adjustment may be performed using the first data channel (e.g., SCDC) of the first connection interface 101 connected to the source device 20, the main controller 190 may determine to perform a first lip sync adjustment using the first data channel of the first connection interface 101 (304). In addition, the main controller 190 may prohibit a second lip sync adjustment using the second data channel of the second connection interface 102 connected to the sound output device 30 (305).

Referring to FIG. 4, the main controller 190 may obtain source data including video data and audio data from the source device 20 (401). The main controller 190 may determine video latency, which indicates the time taken to process the video data, and first audio latency, which indicates the time taken to process the audio data (402). The main controller 190 may determine second audio latency caused by the sound output device 30 (403). The main controller 190 may obtain information about the second audio latency from the sound output device 30.

Because the source device 20 supports the use of the first data channel, the main controller 190 may transmit total latency information to the source device 20 (404). The total latency information may include the video latency, the first audio latency, and the second audio latency. The main controller 190 may control the first controller 120 to transmit the total latency information to the source device 20.

The main controller 190 may obtain lip sync-adjusted source data from the source device 20 (405). The main controller 190 may process the audio data included in the lip sync-adjusted source data, and may transmit the processed audio data to the sound output device 30 (406). The main controller 190 may process the video data included in the lip sync-adjusted source data, and control the display 140 to output video (407). Because the source data transmitted from the source device 20 reflects the total latency information caused by the display apparatus 10 and the sound output device 30, video output through the display 140 and audio output through the sound output device 30 may be synchronized without additional lip sync adjustment.

Referring back to FIG. 3, in a case where the source device 20 does not support lip sync adjustment through the first data channel, the main controller 190 may determine that the first lip sync adjustment through the first data channel is not capable. In this case, the main controller 190 may determine to perform the second lip sync adjustment using the second data channel of the second connection interface 102 connected to the sound output device 30 (306).

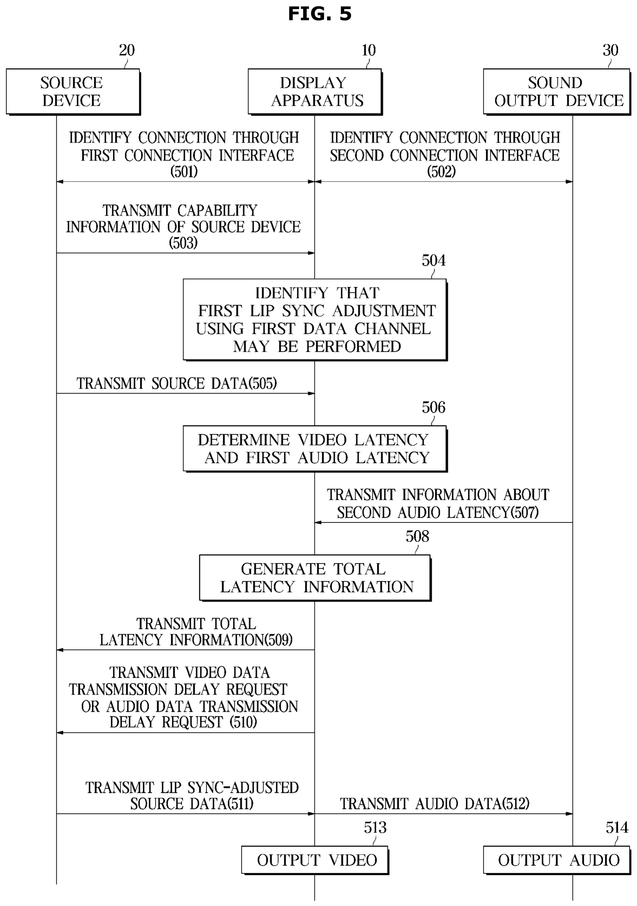

FIG. 5 is a flowchart illustrating an example of data and information exchange among a display apparatus, a source device, and a sound output device.

Referring to FIG. 5, the display apparatus 10 may identify the connection between the first connection interface 101 and the source device 20 (501). The display apparatus 10 may identify the connection between the second connection interface 102 and the sound output device 30 (502).

The source device 20 may transmit its capability information to the display apparatus 10 (503). The capability information of the source device 20 may include information about whether the source device 20 supports the use of the first data channel (e.g., SCDC) included in the first connection interface 101 and whether the source device 20 supports lip sync adjustment through the first data channel.

The display apparatus 10 may identify that the first lip sync adjustment using the first data channel may be performed from the capability information of the source device 20 (504). As the first lip sync adjustment using the first data channel may be performed, the display apparatus 10 may not perform the second lip sync adjustment using the second data channel of the second connection interface 102 to which the sound output device 30 is connected.

The source device 20 may transmit source data including video data and audio data to the display apparatus 10 (505). The display apparatus 10 may determine video latency, which indicates the time taken to process the video data, and first audio latency, which indicates the time taken to process the audio data (506). The sound output device 30 may transmit information about second audio latency caused by the sound output device 30 to the display apparatus 10 (507). The display apparatus 10 may generate total latency information including the video latency, the first audio latency, and the second audio latency (508). The display apparatus 10 may transmit the total latency information to the source device 20.

In addition, the display apparatus 10 may transmit a video data transmission delay request or an audio data transmission delay request to the source device 20, based on a result of comparing a sum of the first audio latency and the second audio latency with the video latency (510). For example, in a case where the sum of the first audio latency and the second audio latency is longer than the video latency, the main controller 190 may control the first controller 120 to transmit the video data transmission delay request to the source device 20. In a case where the sum of the first audio latency and the second audio latency is shorter than the video latency, the main controller 190 may control the first controller 120 to transmit the audio data transmission delay request to the source device 20. The video data transmission delay request or the audio data transmission delay request may be included in the total latency information.

The source device 20 may transmit, to the display apparatus 10, the lip sync-adjusted source data that reflects the total latency information (511). The display apparatus 10 may transmit the audio data included in the source data to the sound output device 30.

The display apparatus 10 may output video based on the video data included in the source data (513). The sound output device 30 may output audio based on the audio data received from the display apparatus 10 (514). Accordingly, video output through the display apparatus 10 and audio output through the sound output device 30 may be synchronized.

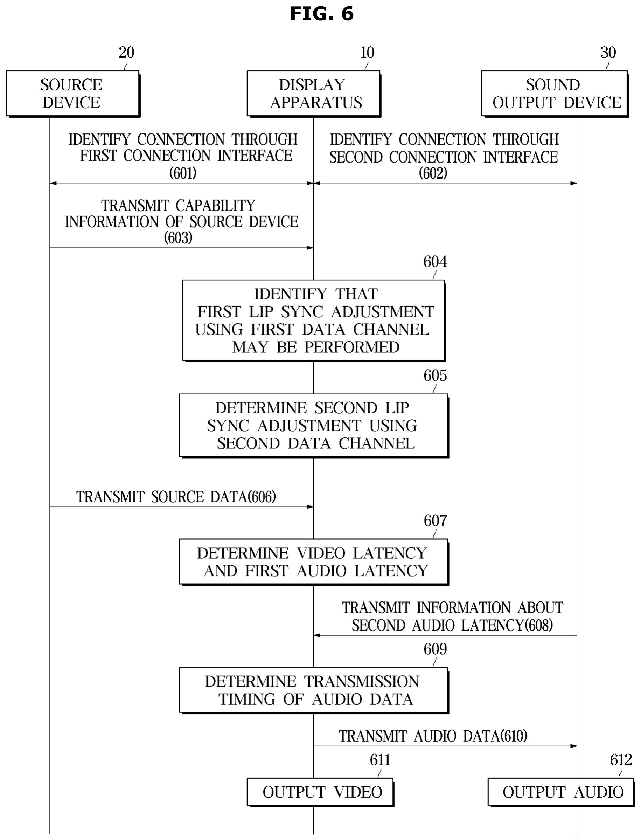

FIG. 6 is a flowchart illustrating another example of data and information exchange among a display apparatus, a source device, and a sound output device.

Referring to FIG. 6, the display apparatus 10 may identify the connection between the first connection interface 101 and the source device 20 (601). The display apparatus 10 may identify the connection between the second connection interface 102 and the sound output device 30 (602). The source device 20 may transmit capability information to the display apparatus 10 (603).

The display apparatus 10 may identify that the first lip sync adjustment using the first data channel may not be performed from the capability information of the source device 20 (604). As the first lip sync adjustment using the first data channel may not be performed, the display apparatus 10 may determine the second lip sync adjustment using the second data channel (e.g., CEC channel) of the second connection interface 102 to which the sound output device 30 is connected (605).

The source device 20 may transmit source data including video data and audio data to the display apparatus 10 (606). The display apparatus 10 may determine video latency, which indicates the time taken to process the video data, and first audio latency, which indicates the time taken to process the audio data (607). The sound output device 30 may transmit information about the second audio latency caused by the sound output device 30 to the display apparatus 10 (608).

The display apparatus 10 may determine a transmission timing of audio data for transmitting the audio data to the sound output device 30 (609). The display apparatus 10 may determine the transmission timing of audio data based on a difference between the total audio latency, which is the sum of the first audio latency and the second audio latency, and the video latency. The display apparatus 10 may transmit the audio data to the sound output device 30 at the determined transmission timing (610).

The display apparatus 10 may output video based on the video data (611). The sound output device 30 may output audio based on the audio data received from the display apparatus 10 (612). Accordingly, video output through the display apparatus 10 and audio output through the sound output device 30 may be synchronized.

According to the disclosure, a display apparatus may include: a first connection interface connected to a source device; a second connection interface connected to a sound output device; a first controller configured to perform a first lip sync adjustment for video output and audio output using a first data channel of the first connection interface; a second controller configured to perform a second lip sync adjustment for the video output and the audio output using a second data channel of the second connection interface; and a main controller configured to identify the first lip sync adjustment performed by the first controller or the second lip sync adjustment performed by the second controller, based on whether the source device supports the first lip sync adjustment through the first data channel.

The main controller may be configured to control the first controller to perform the first lip sync adjustment using the first data channel and control the second controller to not perform the second lip sync adjustment using the second data channel, based on the source device supporting the first lip sync adjustment through the first data channel.

The main controller may be configured to obtain source data including video data and audio data from the source device. The main controller may be configured to generate total latency information including a video latency for the video data, first audio latency for the audio data, and second audio latency of the sound output device. The main controller may be configured to control the first controller to transmit the total latency information to the source device to perform the first lip sync adjustment.

The main controller may be configured to compare a sum of the first audio latency and the second audio latency with the video latency. The main controller may be configured to control the first controller to transmit a first request for delaying transmission of the video data or a second request for delaying transmission of the audio data to the source device based on a result of the comparing.

The main controller may be configured to control the second controller to perform the second lip sync adjustment using the second data channel, based on the source device not supporting the first lip sync adjustment through the first data channel.

The main controller may be configured to obtain source data including video data and audio data from the source device, and identify a video latency for the video data, a first audio latency for the audio data, and a second audio latency of the sound output device. The main controller may be configured to identify a transmission timing of the audio data based on a difference between a total audio latency, which is a sum of the first audio latency and the second audio latency, and the video latency. The main controller may be configured to control the second controller to transmit the audio data to the sound output device at the identified transmission timing.

The first connection interface may be of an identical type to the second connection interface. The first data channel may be a different type than the second data channel.

The first connection interface and the second connection interface may be high definition multimedia interface (HDMI). The first data channel may be a status and control data channel (SCDC). The second data channel may be a consumer electronics control (CEC) channel.

The main controller may be configured to identify whether the source device supports the first lip sync adjustment through the first data channel based on capability information of the source device.

According to the disclosure, in a method for controlling a display apparatus including a first connection interface connected to a source device, a second connection interface connected to a sound output device, and a processor, the method may include: identifying, by a processor, whether the source device supports a first lip sync adjustment for video output and audio output using a first data channel of the first connection interface; and identifying, by the processor, the first lip sync adjustment using the first data channel or a second lip sync adjustment for the video output and the audio output using a second data channel of the second connection interface, based on whether the source device supports the first lip sync adjustment through the first data channel.

The first lip sync adjustment may be performed and the second lip sync adjustment may be prohibited, based on information being transmittable to the source device through the first data channel.

The performing of the first lip sync adjustment may include: obtaining source data including video data and audio data from the source device; generating total latency information including video latency for the video data, first audio latency for the audio data, and second audio latency of the sound output device; and transmitting the total latency information to the source device.

The performing of the first lip sync adjustment may include: comparing a sum of the first audio latency and the second audio latency with the video latency; and transmitting a first request for delaying transmission of the video data or a second request for delaying transmission of the audio data to the source device based on a result of the comparing.

The second lip sync adjustment may be performed based on information not being transmittable to the source device through the first data channel. The performing of the second lip sync adjustment may include: obtaining source data including video data and audio data from the source device; identifying a video latency for the video data, a first audio latency for the audio data, and a second audio latency of the sound output device; identifying a transmission timing of the audio data based on a difference between a total audio latency, which is a sum of the first audio latency and the second audio latency, and the video latency; and transmitting the audio data to the sound output device at the identified transmission timing.

As described above, the display apparatus and the method for controlling the same may adjust synchronization between video output and audio output by selectively using one of the plurality of lip sync control technologies. That is, the display apparatus and the method for controlling the same may prevent errors caused by redundant application of the plurality of lip sync control technologies.

Meanwhile, the disclosed embodiments may be implemented in the form of a recording medium that stores instructions executable by a computer. The instructions may be stored in the form of program codes, and when executed by a processor, the instructions may generate a program module to perform the operations of the disclosed embodiments.

The machine-readable recording medium may be provided in the form of a non-transitory storage medium. Here, when a storage medium is referred to as "non-transitory", it may be understood that the storage medium is tangible and does not include a signal (e.g., an electromagnetic wave), but rather that data is semi-permanently or temporarily stored in the storage medium. For example, a "non-transitory storage medium" may include a buffer in which data is temporarily stored.

The method according to various embodiments disclosed herein may be provided in a computer program product. The computer program product may be traded between a seller and a buyer as a product. The computer program product may be distributed in the form of a machine-readable storage medium (e.g., compact disc read only memory (CD-ROM)), or may be distributed (e.g., download or upload) through an application store (e.g., Play Store ^{TM}) online or directly between two user devices (e.g., smartphones). In the case of online distribution, at least a portion of the computer program product (e.g., downloadable app) may be stored at least semi-permanently or may be temporarily generated in a storage medium, such as a memory of a server of a manufacturer, a server of an application store, or a relay server.

Although embodiments of the disclosure have been described with reference to the accompanying drawings, a person having ordinary skilled in the art will appreciate that other specific modifications may be easily made without departing from the technical spirit or essential features of the disclosure. Therefore, the foregoing embodiments should be regarded as illustrative rather than limiting in all aspects.

## Claims

1. A display apparatus comprising:
a first connection interface connected to a source device;
a second connection interface connected to a sound output device;
a first controller configured to perform a first lip sync adjustment for video output and audio output using a first data channel of the first connection interface;
a second controller configured to perform a second lip sync adjustment for the video output and the audio output using a second data channel of the second connection interface; and
a main controller configured to identify the first lip sync adjustment performed by the first controller or the second lip sync adjustment performed by the second controller, based on whether the source device supports the first lip sync adjustment through the first data channel.

2. The display apparatus of claim 1, wherein the main controller is further configured to control the first controller to perform the first lip sync adjustment using the first data channel and control the second controller to not perform the second lip sync adjustment using the second data channel, based on the source device supporting the first lip sync adjustment through the first data channel.

3. The display apparatus of claim 2, wherein the main controller is further configured to:
obtain source data including video data and audio data from the source device;
generate total latency information including a video latency for the video data, first audio latency for the audio data, and second audio latency of the sound output device; and
control the first controller to transmit the total latency information to the source device to perform the first lip sync adjustment.

4. The display apparatus of claim 3, wherein the main controller is further configured to:
compare a sum of the first audio latency and the second audio latency with the video latency; and
control the first controller to transmit a first request for delaying transmission of the video data or a second request for delaying transmission of the audio data to the source device based on a result of the comparing.

5. The display apparatus of claim 1, wherein the main controller is further configured to control the second controller to perform the second lip sync adjustment using the second data channel, based on the source device not supporting the first lip sync adjustment through the first data channel.

6. The display apparatus of claim 5, wherein the main controller is further configured to:
obtain source data including video data and audio data from the source device;
identify a video latency for the video data, a first audio latency for the audio data, and a second audio latency of the sound output device;
identify a transmission timing of the audio data based on a difference between a total audio latency, which is a sum of the first audio latency and the second audio latency, and the video latency; and
control the second controller to transmit the audio data to the sound output device at the identified transmission timing.

7. The display apparatus of claim 1, wherein the first connection interface is an identical type to the second connection interface, and the first data channel is a different type than the second data channel.

8. The display apparatus of claim 7, wherein the first connection interface and the second connection interface are high definition multimedia interface (HDMI),
wherein the first data channel is a status and control data channel (SCDC), and
wherein the second data channel is a consumer electronics control (CEC) channel.

9. The display apparatus of claim 1, wherein the main controller is configured to identify whether the source device supports the first lip sync adjustment through the first data channel based on capability information of the source device.

10. A method for controlling a display apparatus comprising a first connection interface connected to a source device, a second connection interface connected to a sound output device, and a processor, the method comprising:
identifying, by the processor, whether the source device supports a first lip sync adjustment for video output and audio output using a first data channel of the first connection interface; and
identifying, by the processor, the first lip sync adjustment using the first data channel or a second lip sync adjustment for the video output and the audio output using a second data channel of the second connection interface, based on whether the source device supports the first lip sync adjustment through the first data channel.

11. The method of claim 10, wherein the first lip sync adjustment is performed and the second lip sync adjustment is prohibited, based on information being transmittable to the source device through the first data channel.

12. The method of claim 11, wherein the performing the first lip sync adjustment comprises:
obtaining source data including video data and audio data from the source device;
generating total latency information including video latency for the video data, first audio latency for the audio data, and second audio latency of the sound output device; and
transmitting the total latency information to the source device.

13. The method of claim 12, wherein the performing the first lip sync adjustment comprises:
comparing a sum of the first audio latency and the second audio latency with the video latency; and
transmitting a first request for delaying transmission of the video data or a second request for delaying transmission of the audio data to the source device based on a result of the comparing.

14. The method of claim 10, wherein the second lip sync adjustment is performed based on information not being transmittable to the source device through the first data channel, and
wherein the performing the second lip sync adjustment comprises:
obtaining source data including video data and audio data from the source device;
identifying a video latency for the video data, a first audio latency for the audio data, and a second audio latency of the sound output device;
identifying a transmission timing of the audio data based on a difference between a total audio latency, which is a sum of the first audio latency and the second audio latency, and the video latency; and
transmitting the audio data to the sound output device at the identified transmission timing.

15. The method of claim 10, wherein the first connection interface is an identical type to the second connection interface, and the first data channel is a different type than the second data channel.
